(19) Europäisches Patentamt
European Patent Office
Office européen des brevets

(11) **EP 4 264 058 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **21839130.8**

(22) Anmeldetag: **14.12.2021**

(51) Internationale Patentklassifikation (IPC):
**F04D 25/06** (2006.01)   **F04D 29/44** (2006.01)
**F04D 29/58** (2006.01)   **H02K 5/18** (2006.01)
**F04D 25/08** (2006.01)

(52) Gemeinsame Patentklassifikation (CPC):
**F04D 29/5806; F04D 25/0606; F04D 25/082; F04D 29/444; H02K 5/18; H02K 5/225; H02K 9/06; H02K 11/33**

(86) Internationale Anmeldenummer:
**PCT/EP2021/085702**

(87) Internationale Veröffentlichungsnummer:
**WO 2022/129055 (23.06.2022 Gazette 2022/25)**

(54) **IMPELLERMASCHINE**

MOTOR COOLING SYSTEM

SYSTÈME DE REFROIDISSEMENT DE MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2020 EP 20215021**

(43) Veröffentlichungstag der Anmeldung:
**25.10.2023 Patentblatt 2023/43**

(73) Patentinhaber: **mdGroup Germany GmbH
57072 Siegen (DE)**

(72) Erfinder: **SCHÜBELER, Daniel
57072 Siegen (DE)**

(74) Vertreter: **Glawe, Delfs, Moll
Partnerschaft mbB
Hopfenmarkt 33
20457 Hamburg (DE)**

(56) Entgegenhaltungen:
| EP-A1- 3 141 757 | EP-A1- 3 579 391 |
| WO-A1-2008/109022 | WO-A1-2020/160602 |
| JP-A- H11 275 812 | US-A1- 2007 080 590 |

**Beschreibung**

Die Erfindung betrifft eine Impellermaschine mit einem Impellergehäuse, mit einem Motorgehäuse und mit einem Aerostator, der sich zwischen dem Impellergehäuse und dem Motorgehäuse erstreckt. Das Motorgehäuse ist in einem Innenraum des Impellergehäuses angeordnet. Die Impellermaschine umfasst einen Aerorotor zum Erzeugen eines Luftstroms entlang eines zwischen dem Impellergehäuse und dem Motorgehäuse eingeschlossenen Ringraums.

Beim Betrieb einer Impellermaschine wird in erheblichem Umfang Wärme erzeugt. Werden beispielsweise bei einer Impellermaschine mit einer Leistung in der Größenordnung von einigen Kilowatt 5-10 % der Antriebsleistung in Wärme umgesetzt, kann es zu einer Überhitzung von Komponenten der Impellermaschine kommen, falls die Wärme nicht ausreichend abgeführt wird.

Dokument EP 3 579 391 A1 offenbart einen Lüftermotor, mit einem Innengehäuse, wobei an einer Außenumfangsfläche des Innengehäuses ein Wärmeableitungsflügel zum Leiten der in einen Einlass angesaugten und dann zwischen dem Innengehäuse und einem Außengehäuse geleiteten Luft ausgebildet ist.

Dokument WO 2008 109 022 A1 offenbart einen Lüftermotor mit einem Aerostator und mit separaten Wärmeableitungsrippen.

Der Erfindung liegt die Aufgabe zugrunde, eine Impellermaschine mit einer verbesserten Wärmeabfuhr vorzustellen. Die Aufgabe wird gelöst mit den Merkmalen des unabhängigen Anspruchs. Vorteilhafte Ausführungsformen sind in den Unteransprüchen angegeben.

Bei der erfindungsgemäßen Impellermaschine ist die Außenseite des Motorgehäuses mit einer Kühlrippe versehen, die sich von dem Motorgehäuse bis zu einem peripheren Ende erhebt. Ein stromaufwärts angeordneter Abschnitt der Kühlrippe ist in einer anderen Umfangsposition angeordnet als ein stromabwärts angeordneter Abschnitt der Kühlrippe.

Die Erfindung hat erkannt, dass die Kühlwirkung einer Kühlrippe sich verbessert, wenn die Kühlrippe sich nicht parallel zur Axialrichtung der Impellermaschine erstreckt, sondern einen Verlauf auf der Außenseite des Motorgehäuses hat, bei dem die Umfangsposition der Kühlrippe sich mit dem Verlauf der Kühlrippe ändert.

Für die Kühlwirkung ist es von Vorteil, wenn die Kühlrippe eine große Länge hat. Die Kühlrippe kann sich in Axialrichtung über wenigstens 60 %, vorzugsweise wenigstens 80 %, weiter vorzugsweise wenigstens 90 % der Länge des Motorgehäuses erstrecken. In einer Ausführungsform fällt das stromaufwärts gelegene Ende der Kühlrippe mit dem stromaufwärts gelegenen Ende des Motorgehäuses zusammen. Das stromabwärts gelegene Ende der Kühlrippe kann mit dem stromabwärts gelegenen Ende des Motorgehäuses zusammenfallen. Als Motorgehäuse wird das Bauteil bezeichnet, das den Motor umgibt und in dem der Motor gehalten ist. Ein ggf.

an das Motorgehäuse anschließender Gehäusedeckel ist ein vom Motorgehäuse separates Bauteil.

Die Höhe der Kühlrippe entspricht dem Abstand zwischen einem Fuß der Kühlrippe und einem peripheren Ende der Kühlrippe. Das periphere Ende ist ein freies Ende der Kühlrippe, das nicht mit der Impellergehäuse verbunden ist und das von dem Impellergehäuse beabstandet ist. Die Kühlrippe bildet also keine Verbindung zwischen dem Motorgehäuse und dem Impellergehäuse. Die bezogen auf eine gegebene Axialposition der Impellermaschine angeordnete Verbindungslinie zwischen dem peripheren Ende und dem Fuß der Kühlrippe kann sich in Radialrichtung der Impellermaschine erstrecken. Mit anderen Worten steht die Kühlrippe senkrecht auf der Außenseite des Motorgehäuses und erstreckt sich von dort gerade nach außen. Dies kann für alle Axialpositionen der Kühlrippe gelten.

Eine Impellermaschine im Sinne der Erfindung ist eine Axial-Strömungsmaschine. Die mit dem Aerorotor angetriebene Luftströmung hat eine Strömungsrichtung, die parallel zu der Achse des Aerorotors ist. Der Aerorotor hat Rotorblätter, die bezogen auf die Achse in demselben radialen Abschnitt angeordnet sind wie der zwischen dem Impellergehäuse und dem Motorgehäuse angeordnete Ringraum.

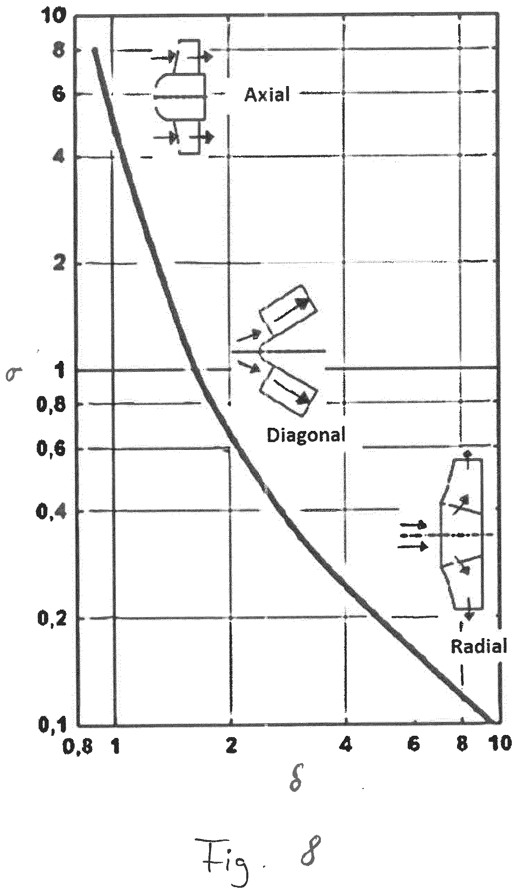

Die Unterscheidung zwischen Impellermaschinen und anderen Arten von Strömungsmaschinen erfolgt anhand des in Fig. 8 gezeigten Cordier-Diagramms, in dem die Laufzahl $\sigma$ (Speed number) gegen die Durchmesserzahl $\delta$ (Diameter number) aufgetragen ist. Von Radial- und Strömungsmaschinen unterscheiden sich die erfindungsgemäßen Impellermaschinen durch einen höheren Wert für die die Laufzahl $\sigma$ sowie durch einen niedrigeren Wert für die Durchmesserzahl $\delta$. Von mantellosen Propellermaschinen unterscheiden sich die erfindungsgemäßen Impellermaschinen durch einen niedrigeren Wert für die die Laufzahl $\sigma$ sowie durch einen höheren Wert für die Durchmesserzahl $\delta$. Die Laufzahl $\sigma$ der erfindungsgemäßen Impellermaschine kann zwischen 1,8 und 10 liegen. Die Durchmesserzahl $\delta$ der erfindungsgemäßen Impellermaschine kann zwischen 0,8 und 1,5 liegen.

Die im Cordier-Diagramm verwendete Laufzahl $\sigma$ ist eine dimensionslose Kennzahl, die wie folgt definiert ist.

$$\sigma = 2\sqrt{\pi}\, n \frac{\sqrt{Q}}{(2Y)^{3/2}}$$

Die Durchmesserzahl $\delta$ ist ebenfalls eine dimensionslose Kennzahl, die wie folgt definiert ist.

$$\delta = \frac{\sqrt{\pi}}{2} D \sqrt[4]{\frac{2Y}{Q^2}}$$

Beide Formeln berücksichtigen den Volumenstrom Q und die spezifische Stutzenarbeit Y (specific head). Betrachtet man diese beiden Größen als vorgegeben durch die vorgesehene Verwendung der Strömungsmaschine, so hängt die Laufzahl $\sigma$ nur noch von der Drehzahl n und die Durchmesserzahl $\delta$ nur noch von dem Durchmesser D des Aerorotors ab. Nähere Erläuterungen dazu finden sich beispielsweise in Epple et al., A theoretical derivation of the Cordier diagram for turbomachines, Proceedings of the Institution of Mechanical Engineers, Part C: Journal of Mechanical Engineering Science 2011 225: 354.

Der zwischen dem Impellergehäuse und dem Motorgehäuse eingeschlossene Ringraum kann einen Abschnitt mit konstantem Querschnitt aufweisen. Der Abschnitt kann sich über wengistens 50 %, vorzugsweise wenigstens 70 %, weiter vorzugsweise wenigstens 80 % der axialen Länge des Ringraums erstrecken. Konstanter Querschnitt bedeutet, dass der Abstand zwischen der Innenseite des Impellergehäuses sowie der Außenseite des Motorgehäuses konstant ist und dass Außendurchmesser sowie Innendurchmesser des Ringraums konstant sind. Aerostatoren und/oder Kühlrippen innerhalb des Ringraums gelten nicht als Änderung des Querschnitts in diesem Sinne. Der Aerorotor kann Rotorblätter aufweisen, die in Radialrichtung der Impellermaschine betrachtet den konstanten Querschnitt des Ringraums abdecken.

Die Impellermaschine kann ein Bauteil umfassen, in dem das Motorgehäuse und die Kühlrippen einstückig miteinander verbunden sind. Das Bauteil kann beispielsweise ein Gussteil, ein 3D-Druckteil oder ein Frästeil sein.

Das Motorgehäuse kann im Wesentlichen die Form eines Zylinders haben. Die Höhe der Kühlrippe zwischen der Außenseite des Motorgehäuses und dem peripheren Ende der Kühlrippe kann zwischen 2 % und 20 %, vorzugsweise zwischen 5 % und 15 % bezogen auf den Durchmesser des Motorgehäuses sein. Bezogen auf die radiale Ausdehnung des Ringraums zwischen der Innenseite des Impellergehäuses und der Außenseite des Motorgehäuses kann die Höhe der Kühlrippe zwischen 2 % und 20 %, vorzugsweise zwischen 5 % und 15 % liegen. Mit einer größeren Höhe der Kühlrippe könnte die Kühlwirkung zwar möglicherweise weiter verbessert werden. Allerdings setzt die Kühlrippe auch dem Luftstrom einen Widerstand entgegen, so dass mit größerer Höhe der Kühlrippe auch der Wirkungsgrad der Impellermaschine sinken würde. Ändert sich der Durchmesser des Motorgehäuses über die Länge der Impellermaschine, so bezieht die Angabe sich auf den größten Durchmesser des Motorgehäuses. Ändert sich die radiale Ausdehnung des Ringraums über die Länge der Impellermaschine, so bezieht die Angabe sich auf die größte radiale Ausdehnung des Ringraums. Die Kühlrippe kann eine über ihre Länge konstante Höhe haben. Ändert sich die Höhe der Kühlrippe über die Länge der Impellermaschine, so bezieht die Angabe sich auf die größte Höhe der Kühlrippe.

Der Verlauf der Kühlrippe entlang der Außenseite des Motorgehäuses kann ein nicht-linearer Verlauf sein. Ein stromaufwärts gelegener Abschnitt der Kühlrippe kann einen größeren Winkel mit einer Längslinie einschließen als ein stromabwärts gelegener Abschnitt der Kühlrippe. Als Längslinie wird eine Linie bezeichnet, die sich auf der Außenseite des Motorgehäuses über die Länge des Motorgehäuses derart erstreckt, dass es eine Ebene gibt, in der sowohl die Achse der Impellermaschine als auch die Längslinie angeordnet sind. Eine Längslinie hat im Sinne der Erfindung eine konstante Umfangsposition.

Das stromaufwärts gelegene Ende der Kühlrippe kann einen Winkel von mehr als 10°, beispielsweise einen Winkel zwischen 10° und 50°, vorzugsweise einen Winkel zwischen 20° und 40° mit der Längslinie einschließen. Das stromabwärts gelegene Ende der Kühlrippe kann einen Winkel von weniger als 8°, vorzugsweise einen Winkel von weniger als 5° mit der Längslinie einschließen. Vorzugsweise schließt das stromabwärts gelegene Ende der Kühlrippe einen Winkel von mehr als 0° mit der Längsrichtung ein, beispielsweise einen Winkel zwischen 1° und 5°. In einer Ausführungsform ist das stromabwärts gelegene Ende der Kühlrippe parallel zu der Längslinie ausgerichtet. Ein zu der Längslinie paralleler Abschnitt der Kühlrippe macht vorzugsweise weniger als 20 %, vorzugsweise weniger als 10 %, weiter vorzugsweise weniger als 5 % der Länge der Kühlrippe aus. Die Kühlrippe kann eine kontinuierliche Krümmung aufweisen. Die Krümmung kann so gestaltet sein, dass der Winkel zwischen der Kühlrippe und der Längslinie vom stromaufwärts gelegenen Ende zum stromabwärts gelegenen Ende der Kühlrippe kontinuierlich kleiner wird. Die kontinuierliche Krümmung kann sich über wenigstens 70 %, vorzugsweise wenigstens 80 %, weiter vorzugsweise wenigstens 90 % der Länge der Kühlrippe erstrecken. Die Kühlrippe kann so gestaltet sein, dass es keine Längslinie gibt, die von der Kühlrippe zweimal geschnitten wird.

Im Innenraum des Motorgehäuses ist ein Motor angeordnet, der eine mit dem Aerorotor verbundene Welle antreibt. Der Aerorotor treibt den Luftstrom durch den Ringraum zwischen dem Motorgehäuse und dem Impellergehäuse an, wobei die Bewegungsrichtung des vom Aerorotor abgegebenen Luftstroms eine Komponente in Axialrichtung und eine Komponente in Umfangsrichtung hat. Das stromaufwärts gelegene Ende der Kühlrippe kann so ausgerichtet sein, dass der Luftstrom im Wesentlichen parallel zu dem Ende der Kühlrippe in den Ringraum eintritt. Die Kühlrippe kann mit ihrer entlang dem Ringraum gekrümmten Form dazu beitragen, den Luftstrom so zu leiten, dass er beim Austritt aus dem Ringraum im Wesentlichen in Axialrichtung gerichtet ist. Der stromaufwärts des Motorgehäuses angeordnete Aerorotor kann innerhalb des Impellergehäuses angeordnet sein.

Das stromabwärts gelegene Ende des Motorgehäuses kann nach hinten über das stromabwärts gelegene Ende des Impellergehäuses hinausragen. Die Kühlrippe kann einen stromabwärts gelegenen Abschnitt umfassen, der außerhalb des von dem Impellergehäuse umgebenen Ringraums liegt. Dies hat den Vorteil, dass der Luftstrom im Bereich des Motorgehäuses auch beim Übergang von dem Ringraum in die Umgebung noch einer Führung unterliegt.

Die Impellermaschine kann eine Mehrzahl von Kühlrippen mit den genannten Merkmalen umfassen. Zwischen zwei benachbarten Kühlrippen kann ein zu einer Seite hin offener Kühlkanal ausgebildet sein. Die Kühlrippen können über den Umfang des Motorgehäuses verteilt sein. Die Kühlrippen aus der Mehrzahl von Kühlrippen können übereinstimmend geformt sein. Zwei Kühlrippen sind übereinstimmend geformt, wenn sie durch eine Drehung der Impellermaschine um seine zentrale Achse ineinander abgebildet werden können. Der seitliche Abstand zwischen zwei Kühlrippen kann zwischen 25 % und 200 % der Höhe der Kühlrippen liegen.

Die Impellermaschine weist einen Aerostator auf, der sich zwischen dem Impellergehäuse und dem Motorgehäuse erstreckt und das Motorgehäuse relativ zu dem Impellergehäuse in Position hält. Die Aerostatoren können sich entlang eines gekrümmten Wegs erstrecken, so dass ein stromaufwärts gelegenes Ende des Aerostators einen größeren Winkel mit der Längslinie einschließt als ein stromabwärts gelegenes Ende des Aerostators. Der Aerostator kann ein gegenüber der durch den Ringraum strömenden Luftströmung wirksames Tragflächenprofil bilden. Die Impellermaschine kann mit mehreren solcher Aerostatoren ausgestattet sein, beispielsweise mit drei Aerostatoren. Die Aerostatoren können über den Umfang des Motorgehäuses gleichverteilt sein.

Zwischen jeweils zwei benachbarten Aerostatoren kann mindestens eine Kühlrippe angeordnet sein. Bevorzugt ist zwischen jeweils zwei benachbarten Aerostatoren eine Mehrzahl von Kühlrippen angeordnet, beispielsweise mindestens drei Kühlrippen, vorzugsweise mindestens fünf Kühlrippen, weiter vorzugsweise mindestens acht Kühlrippen. Dies kann für jedes Paar von benachbarten Aerostatoren gelten.

Zur weiteren Verbesserung der Kühlung kann die Impellermaschine einen Kühlluftkanal umfassen, der sich durch den Innenraum des Motorgehäuses erstreckt. Der Kühlluftkanal kann eine Einlassöffnung aufweisen, die an einem stromabwärts gelegenen Ende des Motorgehäuses angeordnet ist. Der Kühlluftkanal kann eine Auslassöffnung aufweisen, die stromaufwärts von der Einlassöffnung angeordnet ist. Die Auslassöffnung kann sich durch die Wand des Motorgehäuses erstrecken und in den Ringraum münden. Der Abstand zwischen der Auslassöffnung und der Einlassöffnung kann größer sein, vorzugsweise wenigstens doppelt so groß sein, wie der Abstand zwischen der Auslassöffnung und dem Aerorotor. Die Impellermaschine kann eine Mehrzahl solcher Kühlluftkanäle haben.

Die Auslassöffnung des Kühlluftkanals kann in einem Bereich des Ringraums münden, in dem im Betrieb der Impellermaschine ein Unterdruck anliegt, der niedriger ist als der Druck an der Einlassöffnung. Damit wird es möglich, einen Kühlluftstrom entlang des Kühlluftkanals durch eine Druckdifferenz zwischen der Einlassöffnung und der Auslassöffnung anzutreiben.

Der Unterdruck im Ringraum kann daraus resultieren, dass die Luftströmung auf der einen Seite des Aerostators eine höhere Geschwindigkeit hat als auf der anderen Seite des Aerostators. Die Auslassöffnung des Kühlluftkanals kann benachbart zu der Unterdruckseite eines Aerostators angeordnet sein. Der Abstand zwischen der Auslassöffnung und der Überdruckseite des nächsten Aerostators kann wenigstens doppelt so groß sein, vorzugsweise wenigstens dreimal so groß sein wie der Abstand zwischen der Auslassöffnung und der Unterdruckseite des benachbarten Aerostators. Möglich ist auch, dass der Aerostator in seinem Inneren einen an den Innenraum des Motorgehäuses angeschlossenen Hohlraum hat und dass die Auslassöffnung in einer zur Unterdruckseite gerichteten Wand des Aerostators angeordnet ist.

Alternativ können die erfindungsgemäßen Kühlrippen auch an einem Motorgehäuse angebracht sein, dessen Innenraum frei von einem Kühlkanal ist. Insbesondere kann die Impellermaschine ein Motorgehäuse umfassen, dessen Innenraum staubdicht und/oder wasserdicht abgeschlossen ist. Eine wirksame Kühlung kann auf diese Weise auch bei solchen Impellermaschinen erreicht werden, die bei widrigen Umgebungsbedingungen eingesetzt werden und bei denen deswegen auf eine interne Kühlung verzichtet werden muss.

Im Inneren des Motorgehäuses kann ein elektrisch angetriebener Motor angeordnet sein. Der elektrische Motor kann von einer außerhalb der Impellermaschine liegenden Energiequelle mit elektrischer Energie gespeist werden. Der Motor kann eine Motorwelle antreiben, die sich in Axialrichtung der Impellermaschine erstreckt. An die Motorwelle kann ein Aerorotor angeschlossen sein, der mit der Motorwelle in Drehung versetzt wird. Der Aerorotor kann Rotorblätter umfassen, die sich im Wesentlichen in Radialrichtung nach außen erstrecken. Die Rotorblätter können so angeordnet und dimensioniert sein, dass sie den radialen Abschnitt überstreichen, der von dem Ringraum zwischen dem Impellergehäuse und dem Motorgehäuse aufgespannt wird.

Der Aerorotor kann in einem stromaufwärts gelegenen Abschnitt des Ringraums angeordnet sein, so dass der mit dem Aerorotor angetriebene Luftstrom zuerst den Aerorotor und dann den längeren Abschnitt des Ringraums passiert. Das stromaufwärts gelegene Ende der Impellermaschine wird als vorderes Ende bezeichnet, das stromabwärts gelegene Ende der Impellermaschine wird als hinteres Ende bezeichnet. Das Impellergehäuse kann eine geschlossene Hülle bilden, die sich in Umfangsrichtung um den Ringraum herum erstreckt. Ein stromaufwärts angeordneter Abschnitt des Impellergehäuses kann radial außerhalb des Aerorotors angeordnet sein, so dass der Aerorotor im Innenraum des Impellergehäuses angeordnet ist.

Die Impellermaschine umfasst einen Aerostator, der das Motorgehäuse relativ zu dem Impellergehäuse hält. Im Inneren des Aerostators kann ein Kabel geführt sein. Das Kabel kann ein Versorgungskabel sein, über das der Motor der Impellermaschine mit elektrischer Energie versorgt wird. Das Kabel kann auch ein Sensorkabel oder ein Steuerkabel sein, mit dem Signale zwischen dem Innenraum des Motorgehäuses und dem Außenraum des Impellergehäuses übertragen werden.

Die Impellermaschine kann eine Mehrzahl von Aerostatoren umfassen, die sich zwischen dem Impellergehäuse und dem Motorgehäuse erstrecken. Die Mehrzahl von Aerostatoren kann in derselben axialen Position angeordnet sein. Die Positionen der Aerostatoren können bezogen auf den Umfang der Impellermaschine gleichverteilt sein. Es können beispielsweise drei Aerostatoren über den Umfang der Impellermaschine verteilt sein. Die Aerostatoren können ein Tragflächenprofil aufweisen, um die mit dem Aerorotor erzeugte Luftströmung zu leiten und gleichzurichten.

Der Ringraum kann eine axiale Ausdehnung haben, die sich von der Ebene des Aerorotors bis zu einem stromabwärts gelegenen Ende des Impellergehäuses erstreckt. Die Aerostatoren können mit ihrem hinteren Ende nach hinten über das Impellergehäuse hinaus nach hinten ragen. Ein vorderer Abschnitt des Aerostators kann im Innenraum des Impellergehäuses angeordnet sein.

Die Erfindung wird nachfolgend unter Bezugnahme auf die beigefügten Zeichnungen anhand vorteilhafter Ausführungsformen beispielhaft beschrieben. Es zeigen:

Fig. 1: einen erfindungsgemäßen Impeller;

Fig. 2: eine schematische Schnittdarstellung der Impellermaschine aus Fig. 1;

Fig. 3: eine schematische Darstellung einer Kühlrippe einer erfindungsgemäßen Impellermaschine;

Fig. 4: eine vereinfachte Schnittdarstellung eines erfindungsgemäßen Motorgehäuses;

Fig. 5: eine alternative Ausführungsform einer erfindungsgemäßen Impellermaschine im Teil zerlegten Zustand;

Fig. 6: die Impellermaschine aus Fig. 5 im zusammengesetzten Zustand;

Fig. 7: eine schematische Darstellung eines Aerostators einer erfindungsgemäßen Impellermaschine;

Fig. 8: ein Cordier-Diagramm zur Unterscheidung verschiedener Arten von Strömungsmaschinen.

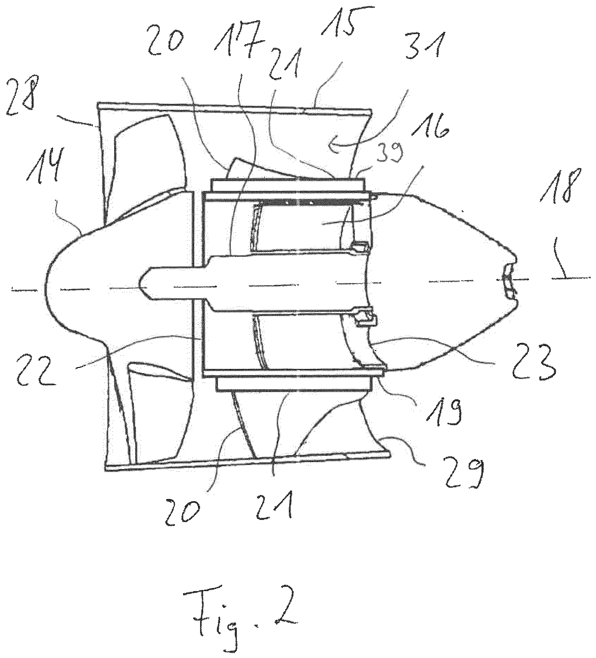

Eine erfindungsgemäße Impellermaschine umfasst gemäß Fig. 2 einen Aerorotor 14, der in einem Impellergehäuse 15 angeordnet ist. Ein Elektromotor 16 treibt eine Welle 17 an, so dass der mit der Welle 17 verbundene Aerorotor 14 in Drehung versetzt wird. Die Welle 17 erstreckt sich entlang einer zentralen Achse 18 der Impellermaschine. Der Motor 16 ist in einem Motorgehäuse 19 gehalten, das im Innenraum des Impellergehäuses 15 angeordnet ist.

Eine Impellermaschine im Sinne der Erfindung ist eine Axial-Strömungsmaschine mit hohem Wirkungsgrad, die im Cordier-Diagramm (Fig. 8) eine Laufzahl $\sigma$ zwischen 1,8 und 10 und eine Durchmesserzahl $\delta$ zwischen 0,8 und 1,5 hat. Von und Radial-Strömungsmaschinen mit hohem Wirkungsgrad unterscheidet sich die erfindungsgemäße Impellermaschine durch einen höheren Wert für die Laufzahl $\sigma$ und einen niedrigeren Wert für die Durchmesserzahl $\delta$. Von mantellosen Propellermaschinen unterscheidet sich die erfindungsgemäße Impellermaschine durch einen niedrigeren Wert für Laufzahl $\sigma$ und einen höheren Wert für die Durchmesserzahl $\delta$. In einem Ringraum 31, der radial außerhalb des Motorgehäuses 19 und radial innerhalb des Impellergehäuses 15 eingeschlossen ist, ist eine Mehrzahl von Aerostatoren 20 ausgebildet, mit denen das Motorgehäuse 19 relativ zu dem Impellergehäuse 15 in Position gehalten wird. Der Aerorotor 14 umfasst eine Mehrzahl von Rotorblättern 21, die an einem stromaufwärts gelegenen Ende des Ringraums 31 umlaufen. Durch die Drehung des Aerorotors 14 wird ein Luftstrom erzeugt, der sich ausgehend von dem Aerorotor 14 durch den Ringraum 31 hindurch bis zum entgegengesetzten, stromabwärts gelegenen Ende der Impellermaschine erstreckt. Das stromaufwärts gelegene Ende ist das vordere Ende der Impellermaschine, das stromabwärts gelegene Ende ist das hintere Ende der Impellermaschine.

Das vordere Ende 28 des Impellergehäuses 15 ist weiter stromaufwärts gelegen als das vordere Ende 22 des Motorgehäuses 19. Das Impellergehäuse 15 umgibt den stromaufwärts des Motorgehäuses 19 angeordneten Aerorotor 14, so dass der Aerorotor sich im Innenraum des Impellergehäuses 15 dreht.

Das hintere Ende 23 des Motorgehäuses 19 ist weiter stromabwärts gelegen als das hintere Ende des Impellergehäuses 29. Das Motorgehäuse 19 umfasst auf diese Weise einen hinteren Abschnitt, der nach hinten über das Impellergehäuse 15 hinausragt.

Auf der Außenseite des Motorgehäuses 19 sind Kühlrippen 21 ausgebildet, die sich ausgehend von dem Motorgehäuse 19 bis zu einem peripheren Ende 39 erheben und die sich in Längsrichtung zwischen dem vorderen Ende 22 und dem hinteren Ende 23 des Motorgehäuses erstrecken. In Fig. 2 sind die Kühlrippen 21 nur schematisch angedeutet. Der Luftstrom in dem Ringraum 31 überstreicht die Oberfläche der Kühlrippen 21 und führt Wärme von Kühlrippen 21 ab. Die im Betrieb der Impellermaschine vom Motor abgegebene Wärme breitet sich durch das Motorgehäuse 19 hindurch zu den Kühlrippen 21 aus und wird dort von dem Luftstrom aufgenommen.

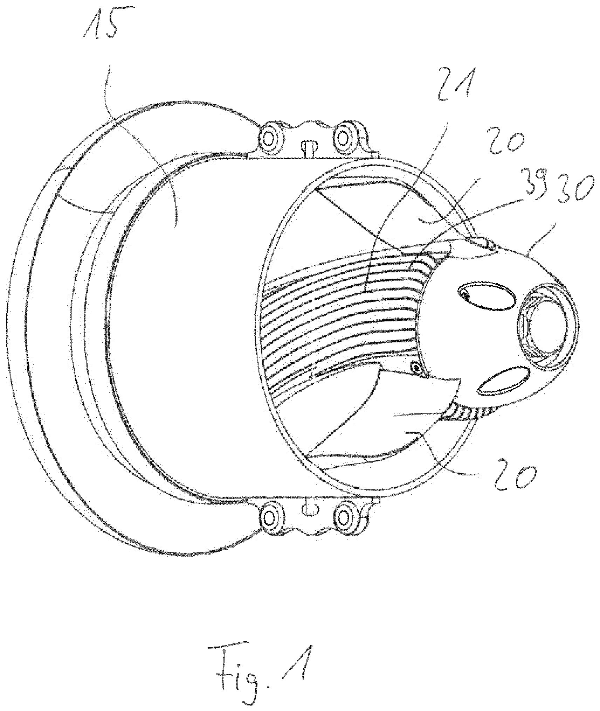

Zwischen zwei benachbarten Aerostatoren 20 ist jeweils eine Mehrzahl von Kühlrippen 21 ausgebildet. In dem Ausführungsbeispiel gemäß Fig. 1 sind elf Kühlrippen zwischen den beiden in der Figur sichtbaren Aerostatoren 20 angeordnet. Bei insgesamt drei Aerostatoren 20 ergeben sich dreiunddreißig über den Umfang des Motorgehäuses 19 verteilte Kühlrippen 21. Die Kühlrippen 21 sind identisch geformt und haben einen gleich bleibenden Abstand zueinander, so dass sich zwischen zwei Kühlrippen 21 jeweils ein zu einer Seite hin offener Kühlkanal mit im Wesentlichen konstantem Querschnitt erstreckt. Der Luftstrom kann den Kühlkanälen folgen, ohne dass sich große Verwirbelungen einstellen.

In Längsrichtung betrachtet ist ein größerer Abschnitt der Kühlrippen 21 innerhalb des Ringraums 31 zwischen dem Impellergehäuse 15 und dem Motorgehäuse 19 angeordnet. Ein kürzerer Abschnitt der Kühlrippen 21 ragt nach hinten aus dem Ringraum 31 heraus. Die Kühlrippen 21 schließen mit dem hinteren Ende des Motorgehäuses 19 ab. An das hintere Ende des Motorgehäuses 19 schließt ein Gehäusedeckel 30 an, mit dem der Motor nach hinten abgedeckt ist.

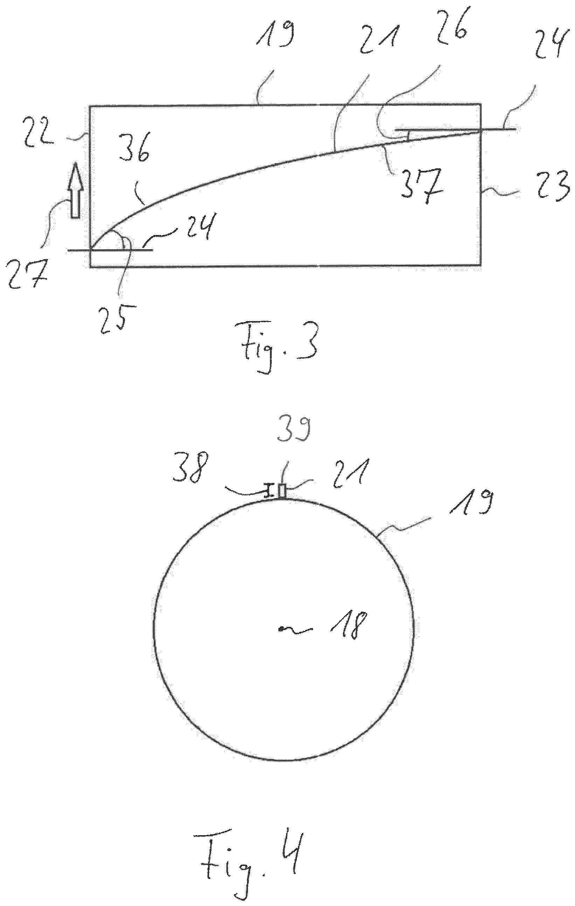

Die Kühlrippen 21 erstrecken sich in Längsrichtung entlang eines gekrümmten Wegs vom vorderen Ende 22 zum hinteren Ende 23 des Motorgehäuses 19. Die Längsrichtung der Kühlrippe 21 schließt gemäß der schematischen Darstellung in Fig. 3 am vorderen Ende 22 des Motorgehäuses 19 einen Winkel 25 von etwa 45° mit der Längslinie 24 ein. Der Winkel zwischen der Längsrichtung der Kühlrippe 21 und der Längslinie 24 wird mit zunehmendem Abstand vom vorderen Ende 22 des Motorgehäuses 19 kontinuierlich kleiner. Am hinteren Ende 23 des Motorgehäuses 19 ist der Winkel zwischen der Längsrichtung der Kühlrippe 21 und der Längslinie 24 noch etwa 5°.

Der Pfeil 27 zeigt die Drehrichtung an, mit der der Aerorotor 14 diesen Umfangsabschnitt des Motorgehäuses 19 passiert. Der Winkel zwischen der Längsrichtung der Kühlrippe 21 am vorderen Ende 22 des Motorgehäuses 19 und der Bewegungsrichtung eines dazu benachbarten Teils des Aerorotors 14 ist kleiner als 90°.

Im Querschnitt betrachtet sind die Kühlrippen 21 gemäß der schematischen Darstellung in Fig. 4 im Wesentlichen rechteckig. Die Kühlrippen 21 haben einen über ihre Länge im Wesentlichen konstanten Querschnitt. Mit der Oberfläche des Motorgehäuses 19 schließen die Kühlrippen 21 einen rechten Winkel ein. Die Kühlrippen 21 erheben sich von der Außenseite des Motorgehäuses 19 bis zu einem freien Ende 39.

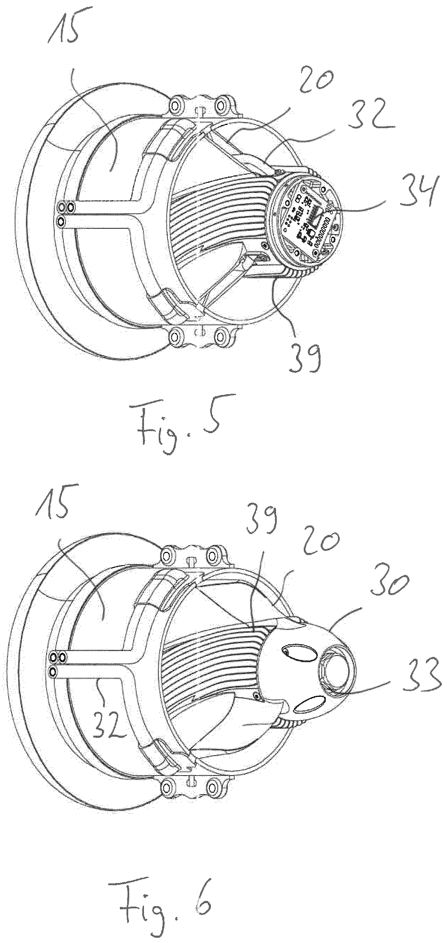

Bei der Ausführungsform gemäß den Fig. 5 und 6 haben die Aerostatoren 20 im Inneren jeweils einen Hohlraum, der zum hinteren Ende hin offen ist. Der Hohlraum erstreckt sich über die gesamte radiale Ausdehnung des Ringraums 31. In dem Hohlraum sind Kabel 32 geführt, die sich aus dem Innenraum des Motorgehäuses 19 zum Außenraum des Impellergehäuses 15 erstrecken. Die Kabel 32 umfassen Versorgungsleitungen, mit denen elektrische Energie von einer außerhalb der Impellermaschine angeordneten Batterie zu dem elektrischen Motor 16 im Motorgehäuse 19 zugeführt wird. Die Kabel 32 können weiter Steuerleitungen und/oder Sensorleitungen, über die im Betrieb der Impellermaschine Signale übertragen werden. Am hinteren Ende des Motorgehäuses 19 ist eine Steuerplatine 34 angeordnet, über die der Motor 16 angesteuert wird. Indem die Kabel 32 innerhalb der Aerostatoren 20 geführt sind, kann vermieden werden, dass der Luftstrom zwischen den Kühlrippen 21 durch Kabel beeinträchtigt wird.

Nach dem Einlegen der Kabel 32 werden die Aerostatoren 20 nach hinten mit einem Gehäusedeckel 30 abgedeckt. Der Gehäusedeckel 30 schließt bündig mit dem Körper der Aerostatoren 20 ab und führt die Kontur der Aerostatoren 20 nach hinten fort. Dieser Zustand der Impellermaschine ist in Fig. 6 gezeigt.

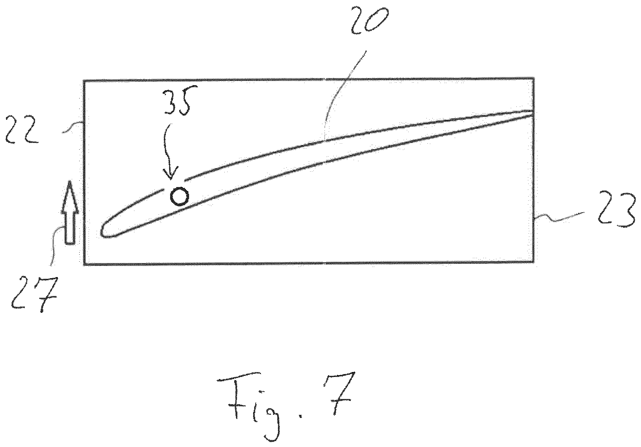

Am hinteren Ende ist der Gehäusedeckel 30 mit einer Eintrittsöffnung 33 eines Kühlluftkanals versehen. Der Kühlluftkanal erstreckt sich von der Eintrittsöffnung 33 durch den Innenraum des Motorgehäuses 19 bis zu einer Austrittsöffnung 35 im Ringraum 31. Die Austrittsöffnung 35 erstreckt sich durch die Wand des Motorgehäuses 19 hindurch und mündet in einem Bereich, in dem im Betrieb der Impellermaschine 19 ein Unterdruck anliegt. In der schematischen Darstellung gemäß Fig. 7 ist die Austrittsöffnung 35 des Kühlluftkanals auf der Unterdruckseite eines Aerostators 20 angeordnet. Die in der Wand des Aerostators ausgebildete Austrittsöffnung 35 ist an einen Hohlraum im Inneren des Aerostators 20 angeschlossen, der seinerseits in Verbindung mit dem Innenraum des Motorgehäuses 19 steht. Wenn an der Austrittsöffnung 35 ein Unterdruck anliegt, während im Bereich der Eintrittsöffnung 33 im Wesentlichen Atmosphärendruck herrscht, wird im Betrieb der Impellermaschine durch die Druckdifferenz ein Kühlluftstrom durch den Kühlluftkanal hindurch erzeugt.

Für eine wirksame Innenkühlung des elektrischen Motors 16 umfasst die Impellermaschine eine Mehrzahl von Austrittsöffnungen 35. Jedem der drei Aerostatoren 20 ist eine Austrittsöffnung 35 zugeordnet, wobei die Austrittsöffnung 35 jeweils auf der Unterdruckseite des Aerostators 20 angeordnet ist. Der Eintritt der Kühlluft am hinteren Ende der Impellermaschine kann über ein oder mehrere Eintrittsöffnungen 33 erfolgen.

Für die Montage der erfindungsgemäßen Impellermaschine werden das Impellergehäuse 15 und das über die Aerostatoren 20 daran angeschlossene Motorgehäuse 19 als einheitliches Bauteil bereitgestellt. Die Kühlrippen 21 auf der Außenseite des Motorgehäuses 19 sind ein Bestandteil des einheitlichen Bauteils. Das Motorgehäuse 19 hat in seinem Inneren einen für die Aufnahme des Elektromotor 16 bestimmten Raum. Der Elektromotor 16 mit den Kabeln 32 und der Steuerplatine 34 wird von hinten an das Motorgehäuse 19 herangeführt und in das Motorgehäuse 19 eingeschoben. Beim Einschieben werden die Kabel 32 in die von hinten zugänglichen Hohlräume der Aerostatoren 20 eingelegt. Die Kabel 32 werden mit Klebstoff in ihrer Position fixiert.

Wenn der Elektromotor 16 seine endgültige Position in dem Motorgehäuse 19 erreicht hat und an einem Anschlag des Motorgehäuses 19 anliegt, wird der Aerorotor 14 von vorne auf die Welle 17 des Elektromotor 16 aufgesetzt und mit der Welle 17 verschraubt.

Anschließend wird das Deckel-Bauteil 38 von hinten auf das Motorgehäuse 19 aufgesetzt und mit dem Motorgehäuse 19 verschraubt. Mit diesem Schritt werden zugleich die Hohlräume der Aerostatoren 20 verschlossen, so dass die Kabel 32 in einem rundherum abgeschlossenen Hohlraum angeordnet sind.


**Patentansprüche**

1. Impellermaschine mit einem Impellergehäuse (15), mit einem Motorgehäuse (19) und mit einem Aerostator (20), der sich zwischen dem Impellergehäuse (15) und dem Motorgehäuse (19) erstreckt, wobei das Motorgehäuse (19) in einem Innenraum des Impellergehäuses (15) angeordnet ist, und mit einem Aerorotor (14) zum Erzeugen eines Luftstroms entlang eines zwischen dem Impellergehäuse (15) und dem Motorgehäuse (19) eingeschlossenen Ringraums (31), wobei das Motorgehäuse (19) an seiner Außenseite mit einer Kühlrippe (21) versehen ist, wobei die Kühlrippe (21) sich von dem Motorgehäuse (19) bis zu einem peripheren Ende (39) erhebt, **dadurch gekennzeichnet, dass** ein stromaufwärts angeordneter Abschnitt (36) der Kühlrippe (21) in einer anderen Umfangsposition angeordnet ist als ein stromabwärts angeordneter Abschnitt (37) der Kühlrippe (21).

2. Impellermaschine nach Anspruch 1, **dadurch gekennzeichnet, dass** die Kühlrippe (21) sich in Axialrichtung (18) über wenigstens 60 %, vorzugsweise wenigstens 80 %, weiter vorzugsweise wenigstens 90 % der Länge des Motorgehäuses (19) erstreckt.

3. Impellermaschine nach Anspruch 1 oder 2, **dadurch gekennzeichnet, dass** die Höhe (38) der Kühlrippe (21) zwischen der Außenseite des Motorgehäuses (19) und dem peripheren Ende (39) zwischen 2 % und 20 %, vorzugsweise zwischen 5 % und 15 % des Durchmessers des Motorgehäuses (19) liegt.

4. Impellermaschine nach einem der Ansprüche 1 bis 3, **dadurch gekennzeichnet, dass** die Höhe (38) der Kühlrippe (21) zwischen der Außenseite des Motorgehäuses (19) und dem peripheren Ende (39) zwischen 2 % und 20 %, vorzugsweise zwischen 5 % und 15 % der radialen Ausdehnung des Ringraums (31) zwischen der Innenseite des Impellergehäuses (15) und der Außenseite des Motorgehäuses (19) liegt.

5. Impellermaschine nach einem der Ansprüche 1 bis 4, **dadurch gekennzeichnet, dass** der Winkel (25), den ein stromaufwärts gelegener Abschnitt (36) der Kühlrippe (21) mit einer Längslinie (24) einschließt, größer ist als der Winkel (24), den ein stromabwärts gelegener Abschnitt (37) der Kühlrippe (21) mit der Längslinie (24) einschließt.

6. Impellermaschine nach einem der Ansprüche 1 bis 5, **dadurch gekennzeichnet, dass** ein stromaufwärts gelegenes Ende der Kühlrippe (21) einen Winkel (25) zwischen 10° und 50°, vorzugsweise einen Winkel (25) zwischen 20° und 40° mit der Längslinie (24) einschließt.

7. Impellermaschine nach einem der Ansprüche 1 bis 6, **dadurch gekennzeichnet, dass** ein stromabwärts gelegenes Ende der Kühlrippe (21) einen Winkel (26) von weniger als 8°, vorzugsweise einen Winkel (25) von weniger als 5° mit der Längslinie (24) einschließt.

8. Impellermaschine nach einem der Ansprüche 1 bis 7, **dadurch gekennzeichnet, dass** der Winkel (25, 26) zwischen der Kühlrippe (21) und der Längslinie (24) vom stromaufwärts gelegenen Ende zum stromabwärts gelegenen Ende der Kühlrippe (21) kontinuierlich kleiner wird.

9. Impellermaschine nach einem der Ansprüche 1 bis 8, **dadurch gekennzeichnet, dass** die Kühlrippe (21) einen stromabwärts gelegenen Abschnitt (37) umfasst, der außerhalb des von dem Impellergehäuse (15) umgebenen Ringraums (31) liegt.

10. Impellermaschine nach einem der Ansprüche 1 bis 9, **gekennzeichnet durch** eine Mehrzahl von über den Umfang des Motorgehäuses (19) verteilten Kühlrippen (21).

11. Impellermaschine nach einem der Ansprüche 1 bis 10, **gekennzeichnet durch** einen Kühlluftkanal, der sich durch den Innenraum des Motorgehäuses (19) erstreckt.

12. Impellermaschine nach Anspruch 11, **dadurch gekennzeichnet, dass** eine Auslassöffnung (35) des Kühlluftkanals in einem Bereich des Ringraums mündet, in dem im Betrieb des Impellermaschine ein Unterdruck anliegt.

13. Impellermaschine nach einem der Ansprüche 1 bis 10, **dadurch gekennzeichnet, dass** der Innenraum des Motorgehäuses (19) staubdicht und/oder wasserdicht abgeschlossen ist.

14. Impellermaschine nach einem der Ansprüche 1 bis 13, **gekennzeichnet durch** einen Aerostator (20), der das Motorgehäuse (19) relativ zu dem Impellergehäuse (15) hält, wobei im Inneren des Aerostators ein Kabel geführt ist.

**Claims**

1. Impeller machine having an impeller housing (15), having a motor housing (19) and having an aero stator (20) which extends between the impeller housing (15) and the motor housing (19), wherein the motor housing (19) is arranged in an interior of the impeller housing (15), and having an aero rotor (14) for generating an airflow along an annular space (31) enclosed between the impeller housing (15) and the motor housing (19), wherein the motor housing (19) is provided on its outer side with a cooling rib (21), wherein the cooling rib (21) rises from the motor housing (19) to a peripheral end (39), **characterized in that** an upstream portion (36) of the cooling rib (21) is arranged in a different peripheral position than a downstream portion (37) of the cooling rib (21).

2. Impeller machine according to Claim 1, **characterized in that** the cooling rib (21) extends in the axial direction (18) over at least 60%, preferably at least 80%, more preferably at least 90% of the length of the motor housing (19).

3. Impeller machine according to Claim 1 or 2, **characterized in that** the height (38) of the cooling rib (21) between the outer side of the motor housing (19) and the peripheral end (39) is between 2% and 20%, preferably between 5% and 15% of the diameter of the motor housing (19).

4. Impeller machine according to any one of Claims 1 to 3, **characterized in that** the height (38) of the cooling rib (21) between the outer side of the motor housing (19) and the peripheral end (39) is between 2% and 20%, preferably between 5% and 15%, of the radial extent of the annular space (31) between the inner side of the impeller housing (15) and the outer side of the motor housing (19).

5. Impeller machine according to any one of Claims 1 to 4, **characterized in that** the angle (25) that an upstream portion (36) of the cooling rib (21) forms with a longitudinal line (24) is greater than the angle (24) that a downstream portion (37) of the cooling rib (21) forms with the longitudinal line (24).

6. Impeller machine according to any one of Claims 1 to 5, **characterized in that** an upstream end of the cooling rib (21) forms an angle (25) between 10° and 50°, preferably an angle (25) between 20° and 40°, with the longitudinal line (24).

7. Impeller machine according to any one of Claims 1 to 6, **characterized in that** a downstream end of the cooling rib (21) forms an angle (26) of less than 8°, preferably an angle (25) of less than 5°, with the longitudinal line (24).

8. Impeller machine according to any one of Claims 1 to 7, **characterized in that** the angle (25, 26) between the cooling rib (21) and the longitudinal line (24) continuously decreases from the upstream end to the downstream end of the cooling rib (21).

9. Impeller machine according to any one of Claims 1 to 8, **characterized in that** the cooling rib (21) comprises a downstream portion (37) located outside the annular space (31) surrounded by the impeller housing (15) .

10. Impeller machine according to any one of Claims 1 to 9, **characterized by** a plurality of cooling ribs (21) distributed over the periphery of the motor housing (19).

11. Impeller machine according to any one of Claims 1 to 10, **characterized by** a cooling air channel which extends through the interior of the motor housing (19).

12. Impeller machine according to Claim 11, **characterized in that** an outlet opening (35) of the cooling air channel opens out in a region of the annular space in which a negative pressure is present during operation of the impeller machine.

13. Impeller machine according to any one of Claims 1 to 10, **characterized in that** the interior of the motor housing (19) is sealed dust-tightly and/or water-tightly.

14. Impeller machine according to any one of Claims 1 to 13, **characterized by** an aero stator (20) which holds the motor housing (19) relative to the impeller housing (15), wherein a cable is routed inside the aero stator.

**Revendications**

1. Machine à impulseur présentant un carter (15) d'impulseur, un carter (19) de moteur et un aérostator (20), qui s'étend entre le carter (15) d'impulseur et le carter (19) de moteur, le carter (19) de moteur étant agencé dans un espace intérieur du carter (15) d'impulseur, et présentant un aérorotor (14) pour la génération d'un flux d'air le long d'un espace annulaire (31) renfermé entre le carter (15) d'impulseur et le carter (19) de moteur, le carter (19) de moteur étant pourvu sur sa face extérieure d'une nervure de refroidissement (21), la nervure de refroidissement (21) s'élevant à partir du carter (19) de moteur jusqu'à une extrémité périphérique (39), **caractérisée en ce qu'**une section (36) agencée en amont de la nervure de refroidissement (21) est agencée dans une autre position périphérique que celle d'une section (37) agencée en aval de la nervure de refroidissement (21).

2. Machine à impulseur selon la revendication 1, **caractérisée en ce que** la nervure de refroidissement (21) s'étend dans la direction axiale (18) sur au moins 60%, de préférence au moins 80%, plus préférablement au moins 90% de la longueur du carter (19) de moteur.

3. Machine à impulseur selon la revendication 1 ou 2, **caractérisée en ce que** la hauteur (38) de la nervure de refroidissement (21) entre la face externe du carter (19) de moteur et l'extrémité périphérique (39) se situe entre 2% et 20%, de préférence entre 5% et 15% du diamètre du carter (19) de moteur.

4. Machine à impulseur selon l'une des revendications 1 à 3, **caractérisée en ce que** la hauteur (38) de la nervure de refroidissement (21) entre la face externe du carter (19) de moteur et l'extrémité périphérique (39) se situe entre 2% et 20%, de préférence entre 5% et 15% de l'étendue radiale de l'espace annulaire (31) entre la face interne du carter (15) d'impulseur et la face externe du carter (19) de moteur.

5. Machine à impulseur selon l'une des revendications 1 à 4, **caractérisée en ce que** l'angle (25) formé par une section (36) située en amont de la nervure de refroidissement (21) et une ligne longitudinale (24) est supérieur à l'angle (24) formé par une section (37) située en aval de la nervure de refroidissement (21) et la ligne longitudinale (24).

6. Machine à impulseur selon l'une des revendications 1 à 5, **caractérisée en ce qu'**une extrémité située en amont de la nervure de refroidissement (21) forme un angle (25) entre 10° et 50°, de préférence un angle (25) entre 20° et 40°, avec la ligne longitudinale (24).

7. Machine à impulseur selon l'une des revendications 1 à 6, **caractérisée en ce qu'**une extrémité située en aval de la nervure de refroidissement (21) forme un angle (26) inférieur à 8°, de préférence un angle (25) inférieur à 5°, avec la ligne longitudinale (24).

8. Machine à impulseur selon l'une des revendications 1 à 7, **caractérisée en ce que** l'angle (25, 26) entre la nervure de refroidissement (21) et la ligne longitudinale (24) de l'extrémité située en amont vers l'extrémité située en aval de la nervure de refroidissement (21) se réduit en continu.

9. Machine à impulseur selon l'une des revendications 1 à 8, **caractérisée en ce que** la nervure de refroidissement (21) comprend une section (37) située en aval, qui se situe en dehors de l'espace annulaire (31) entouré par le carter (15) d'impulseur.

10. Machine à impulseur selon l'une des revendications 1 à 9, **caractérisée par** une multitude de nervures de refroidissement (21) réparties sur la périphérie du carter (19) de moteur.

11. Machine à impulseur selon l'une des revendications 1 à 10, **caractérisée par** un canal à air de refroidissement, qui s'étend à travers l'espace interne du carter (19) de moteur.

12. Machine à impulseur selon la revendication 11, **caractérisée en ce qu'**une ouverture de sortie (35) du canal à air de refroidissement débouche dans une zone de l'espace annulaire dans laquelle règne une dépression lors du fonctionnement de la machine à impulseur.

13. Machine à impulseur selon l'une des revendications 1 à 10, **caractérisée en ce que** l'espace interne du carter (19) de moteur est fermé de manière étanche à la poussière et/ou à l'eau.

14. Machine à impulseur selon l'une des revendications 1 à 13, **caractérisée par** un aérostator (20) qui maintient le carter (19) de moteur par rapport au carter (15) d'impulseur, un câble étant guidé à l'intérieur de l'aérostator.

Fig. 1

Fig. 2

Fig. 3

Fig. 4

Fig. 5

Fig. 6

20

35

22

27

23

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3579391 A1

- WO 2008109022 A1

**In der Beschreibung aufgeführte Nicht-Patentliteratur**

- **EPPLE et al.** A theoretical derivation of the Cordier diagram for turbomachines. *Proceedings of the Institution of Mechanical Engineers, Part C: Journal of Mechanical Engineering Science*, 2011, vol. 225, 354